# FASCICULE DE BREVET EUROPEEN

(11) **EP 1 256 915 B1**
(45) Date de publication et mention de la délivrance du brevet: **20.03.2013**
(21) Numéro de dépôt: 02291023.6
(22) Date de dépôt: 23.04.2002
(51) Int. Cl.: G07G 1/00, G07D 9/00

(54) **Automate et procédé informatisé de préparation et de distribution de fonds de caisses**
Automatisiertes System und Verfahren zur Herstellung und Verteilung von Kassenbeständen
Automated system and method of preparation and distribution of cash floats

(30) Priorité: 26.04.2001 FR 0105624
(43) Date de publication de la demande: 13.11.2002
(73) Titulaire: Traidis,, 92500 Rueil Malmaison (FR)
(72) Inventeur: Cousin, Patrick, 92500 Rueil Malmaison (FR)
(74) Mandataire: Debay, Yves

(56) Documents cités:
- EP-A- 0 933 733
- WO-A-01/54084
- US-A- 5 830 054
- US-B1- 6 196 913

## Description

La présente invention concerne un automate de préparation et de distribution de fonds de caisse et de monnaie sous forme de pièces et billets. L'invention concerne également un procédé de préparation et de distribution de fonds de caisse et de monnaie sous forme de pièces et billets.

Lorsqu'une hôtesse ou un hôte de caisse prend son tiroir-caisse ou a besoin de réapprovisionner son fond de caisse, il doit en général demander à une personne de lui délivrer la quantité de monnaie constituant son fond de caisse initial ou le réassort qu'il souhaite. Ces pièces lui sont en règle générale délivrées sous forme de rouleaux, un rouleau comportant un nombre déterminé de pièces d'un certain type. L'hôtesse ou l'hôte de caisse doit alors casser ces rouleaux pour déverser les pièces dans les compartiments appropriés de son tiroir-caisse. Cette démarche s'avère longue et peu pratique. En effet, l'hôtesse ou l'hôte de caisse doit s'adresser à une personne pour obtenir son tiroir-caisse et son fond de caisse en rouleaux et également, à chaque fois, pour obtenir du réassort.

Il est connu par le document US 5 830 054 un système de distribution de pièces permettant de trier et compter les pièces distribuées. Des unités de distribution permettent de délivrer une seule sorte de pièces selon une quantité requise pour alimenter chacune un compartiment spécifiquement associé d'un tiroir-caisse. D'autres systèmes sont également connus, par exemple par les documents EP 0 933 733, US 6196 913 et WO 01/54084.

La présente invention a pour objet de pallier les inconvénients de l'art antérieur en proposant un automate permettant de distribuer de manière automatique des pièces stockées en vrac dans cet automate. Cet automate selon l'invention présente en particulier l'avantage de pouvoir s'adapter à l'alimentation de différents types de tiroir-caisse.

Ce but est atteint par un automate selon la revendication 1.

Un autre but de l'invention est de proposer un procédé permettant la préparation et la distribution de fonds de caisse et de monnaie.

Ce but est atteint par un procédé selon la revendication 14.

Des développements supplémentaires de l'invention sont décrits dans les revendications dépendantes.

L'invention, avec ses caractéristiques et avantages, ressortira plus clairement à la lecture de la description faite en référence aux dessins annexés dans lesquels :
- la figure 1 représente l'automate selon l'invention,
- la figure 2a, représente schématiquement, en vue de face, l'intérieur du distributeur selon l'invention,
- la figure 2b représente, en vue de dessus, le système de distribution des enveloppes selon l'invention,
- la figure 3 représente un premier type de tiroir-caisse,
- les figures 4a, 4b, et 4c représentent respectivement en perspective, en vue de dessus et en vue de face, le bloc de distribution adapté au premier type de tiroir-caisse,
- la figure 5 représente un deuxième type de tiroir-caisse,
- les figures 6a, 6b, et 6c représentent respectivement en perspective, en vue de dessus et en vue de face, le bloc de distribution adapté au deuxième type de tiroir-caisse,
- la figure 7 représente un troisième type de tiroir-caisse,
- les figures 8a, 8b, et 8c représentent respectivement en perspective, en vue de dessus et en vue de face, le bloc de distribution adapté au troisième type de tiroir-caisse,
- la figure 9 représente un quatrième type de tiroir-caisse,
- la figure 10 représente en perspective le bloc de distribution adapté au quatrième type de tiroir-caisse,
- la figure 11 représente un écran principal de gestion de l'automate selon l'invention,
- la figure 12 représente un écran de paramétrage général de l'automate selon l'invention,
- la figure 13 représente un écran de paramétrage de fonds de caisse,
- la figure 14 représente un écran de paramétrage de la liste des caissières gérée par l'automate,
- la figure 15 représente un organigramme comprenant les étapes exécutées lors du retrait de monnaie à l'aide de l'automate selon l'invention ;
- la figure 16 représente un automate dans une variante avec distributeur de billets de deux types différents et à l'unité, et comportant un ordinateur interne relié à un clavier externe sans fil.

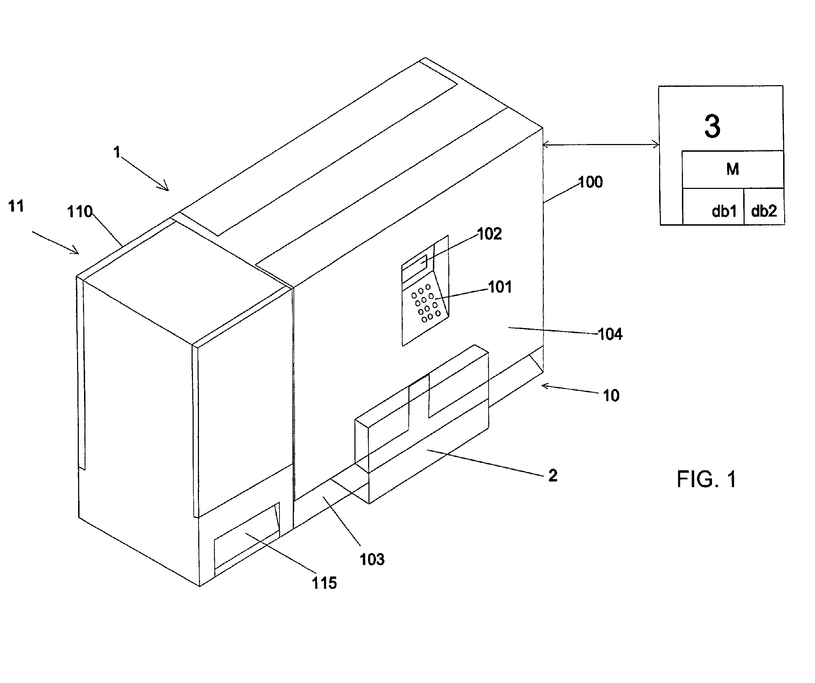

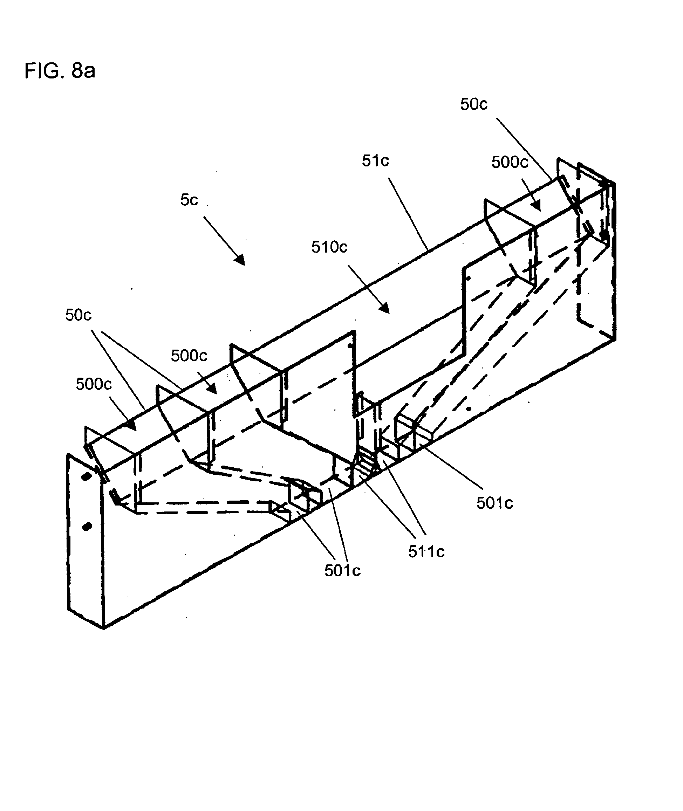

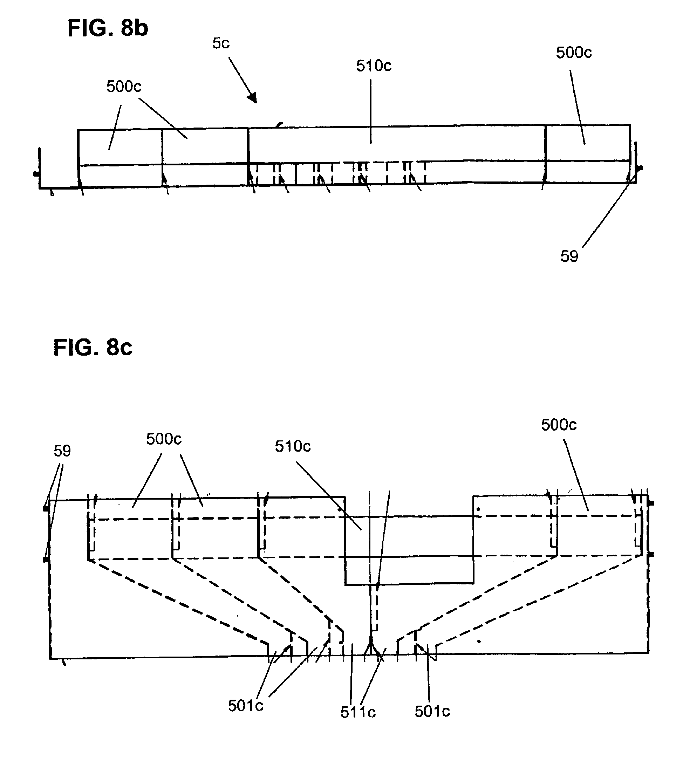

L'invention va à présent être décrite en liaison avec les figures 1 à 15.

L'automate selon l'invention est constitué d'un distributeur (1) couplé à un système informatique (3). Le distributeur (1) selon l'invention, représenté en figure 1, a la forme d'un bloc parallélépipédique constitué principalement de deux parties (10, 11). Une première partie (10) est destinée à la distribution de pièces de monnaie tandis qu'une deuxième partie (11) est destinée, par exemple, à la distribution de billets de banque.

La première partie (10), plus grande que la deuxième partie (11), comprend notamment, vu de l'extérieur, un capot (100), un clavier (101) de saisie associé à un écran (102, 107), tous deux encastrés dans le capot (100) et un logement (103) pour le positionnement d'un tiroir-caisse (2) destiné à réceptionner des pièces de monnaie. Ce logement (103) est constitué d'un trou percé dans le bas d'un panneau (104) latéral de plus grande surface du capot (100), sur toute sa longueur, ce trou étant d'une taille suffisante pour y introduire n'importe quel type de tiroir-caisse (2). Le logement (103) comprendra également une surface de support du tiroir-caisse en position de réception des pièces de monnaie. Le capot (100) sera ouvert pour remplir le distributeur de pièces de monnaie, pour l'entretenir ou le réparer. Le clavier (101) servira principalement à taper un code confidentiel visualisé sur l'écran (102, 107). Cet aspect de l'invention sera décrit plus tard.

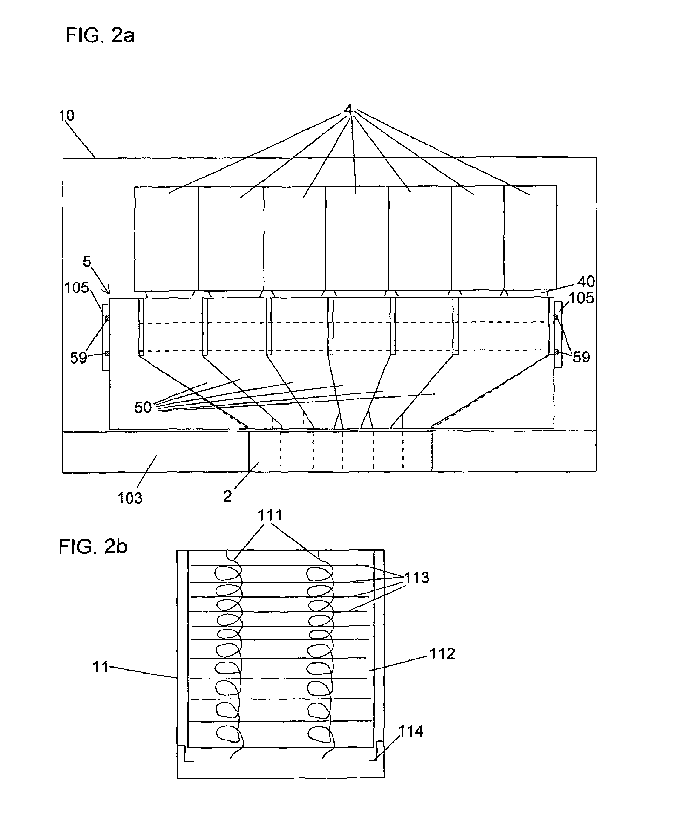

A l'intérieur de la première partie (10) distributrice de pièces de monnaie, représenté schématiquement en figure 2, nous trouvons principalement une pluralité de trémies (4) ("hopper" en anglais) adjacentes et alignées. Une trémie (4) est associée à une catégorie de pièces. Par exemple, en France ou en Europe, pour une monnaie comme l'Euro, il pourrait y avoir une trémie (4) pour les pièces de deux centimes, une trémie (4) pour les pièces de cinq centimes, une trémie (4) pour les pièces de dix centimes, une trémie (4) pour les pièces de vingt centimes, une trémie (4) pour les pièces de cinquante centimes, une trémie (4) pour les pièces d'un euro et enfin une trémie (4) pour les pièces de deux euros. Les trémies (4) sont toutes identiques et ne disposent pas d'une structure particulière en fonction de la catégorie de pièces qu'elles reçoivent. En revanche en fonction de la taille de la catégorie de pièces reçue, les trémies (4) pourront stocker plus ou moins de pièces.

Ces trémies (4) comprennent une entrée pour introduire les pièces et une sortie (40) des pièces. Les pièces sont éjectées une par une par un éjecteur (non représenté). Selon l'invention, la sortie (40) de chaque trémie est placée en vis-à-vis de l'entrée d'une goulotte de distribution de pièces. La sortie de la goulotte de distribution est placée en vis-à-vis d'un compartiment d'un tiroir-caisse (2). La figure 2 est une représentation schématique de l'intérieur de la première partie (10) du distributeur (1). En réalité, les trémies (4) ont une structure plus compliquée intégrant notamment un éjecteur.

L'ensemble des goulottes forme un seul bloc de distribution (5) qui est amovible du distributeur (1). La disposition et la forme des goulottes dans le bloc de distribution dépendent de l'implantation des compartiments dans le tiroir-caisse (2) auquel le distributeur (1) est censé distribuer des pièces de monnaie. Selon l'invention, la première partie (10) du distributeur (1) peut donc recevoir par un système d'accrochage (105), différents blocs de distribution (5) en fonction de la configuration du tiroir-caisse (2) à alimenter. Ce système d'accrochage (105) est constitué, par exemple, de deux tétons (59) positionnés sur les côtés du bloc de distribution (5) et destinés à coulisser dans des rampes formées à l'intérieur de la première partie (10) jusqu'à bloquer le bloc de distribution (5).

Le tiroir-caisse (2) est destiné à être inséré dans le logement (103) prévu dans la première partie (10) du distributeur (1) pour la réception des pièces. Selon l'invention, dans chaque bloc de distribution (5), les goulottes (50) de distribution auront un agencement adapté à la configuration du tiroir-caisse (2). Dans chaque bloc de distribution (5), les goulottes (50) ont une surface d'acheminement des pièces orientée vers le plan médian vertical du bloc de distribution (5). Les goulottes (50) ont une sortie à section inférieure à la section de l'entrée de la goulotte communiquant avec la sortie (40) d'au moins une trémie (4).

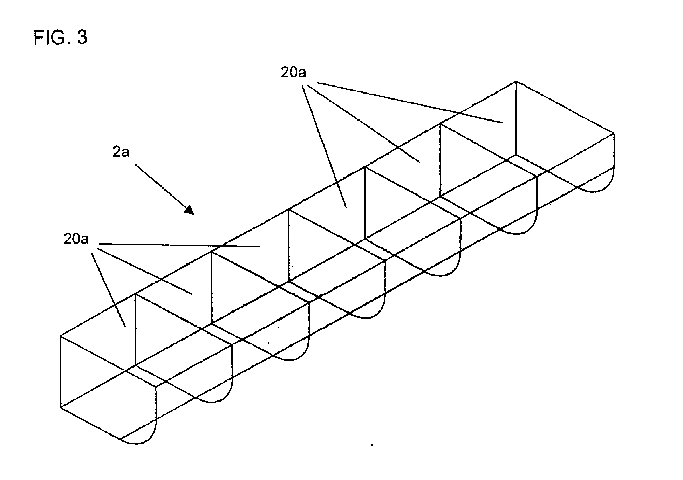

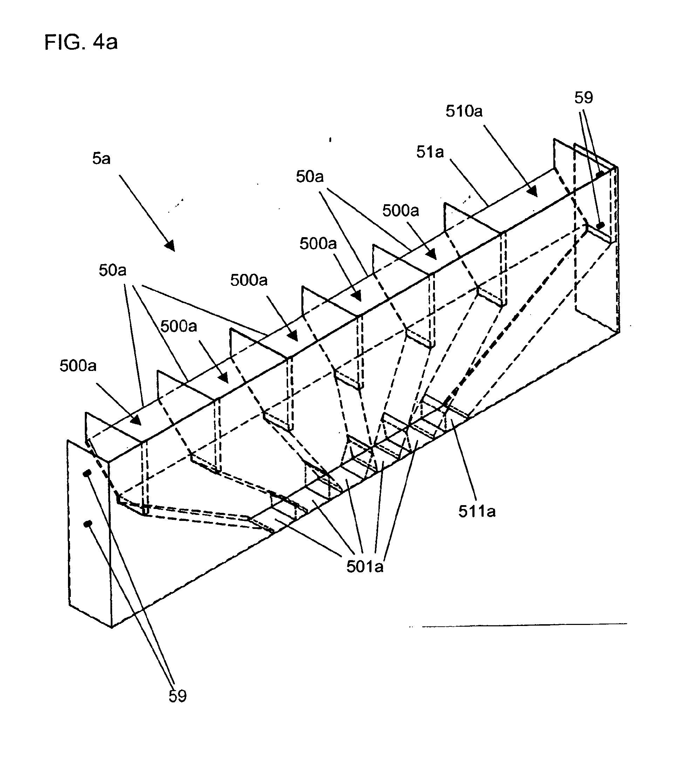

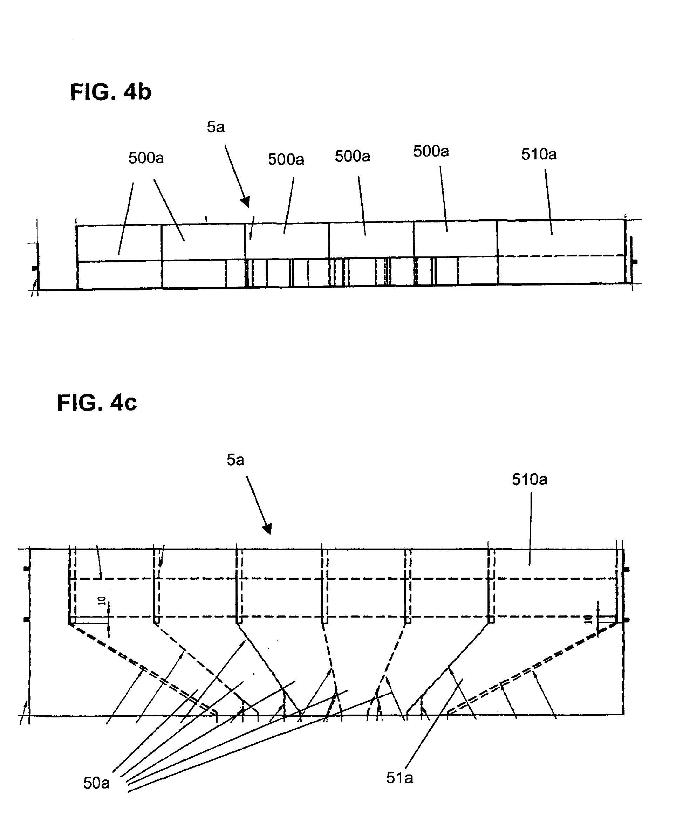

Par exemple, un premier type de tiroir-caisse (2a), représenté en figure 3, est constitué d'une rangée de six compartiments (20a) identiques. Selon l'invention, le bloc de distribution (5a), représenté en figure 4a, 4b et 4c, adapté à ce tiroir-caisse (2a) comprendra six goulottes (50a, 51a) ayant des entrées (500a, 510a) adjacentes et alignées en vis-à-vis des sorties (40) des trémies (4) et des sorties (501a, 511a) adjacentes et alignées, chaque sortie (501a, 511a) étant placée au-dessus d'un compartiment (20a) différent du tiroir-caisse (2a). Ce tiroir-caisse (2a) ne comprend que six compartiments (20a) pour sept trémies (4). Deux trémies (4) distribuent donc un compartiment du tiroir-caisse (2a) via une goulotte (51a) de distribution commune dont l'entrée (510a) est élargie par rapport aux entrées (500a) des autres goulottes (50a). Un compartiment (20a) du tiroir-caisse (2a) recevra alors des pièces provenant des deux trémies.

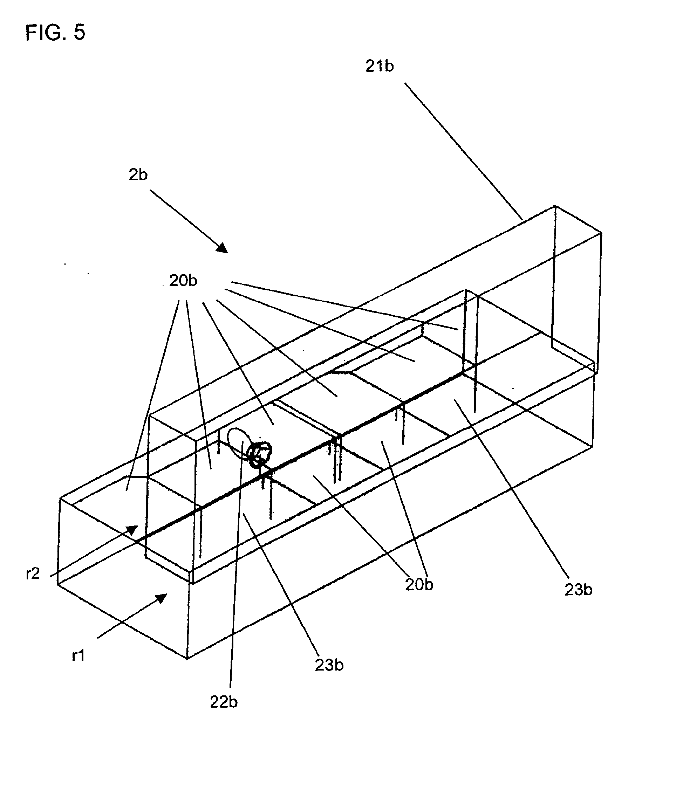

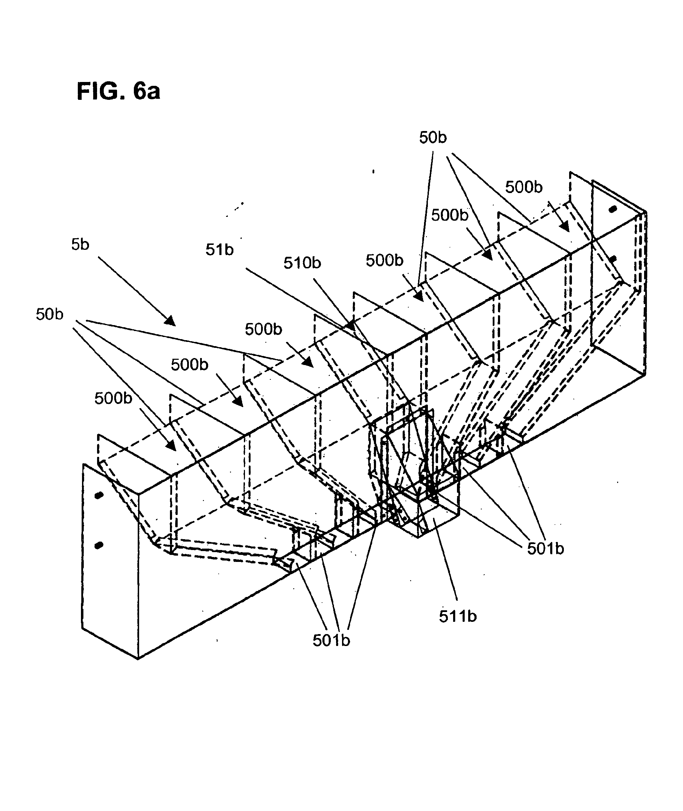

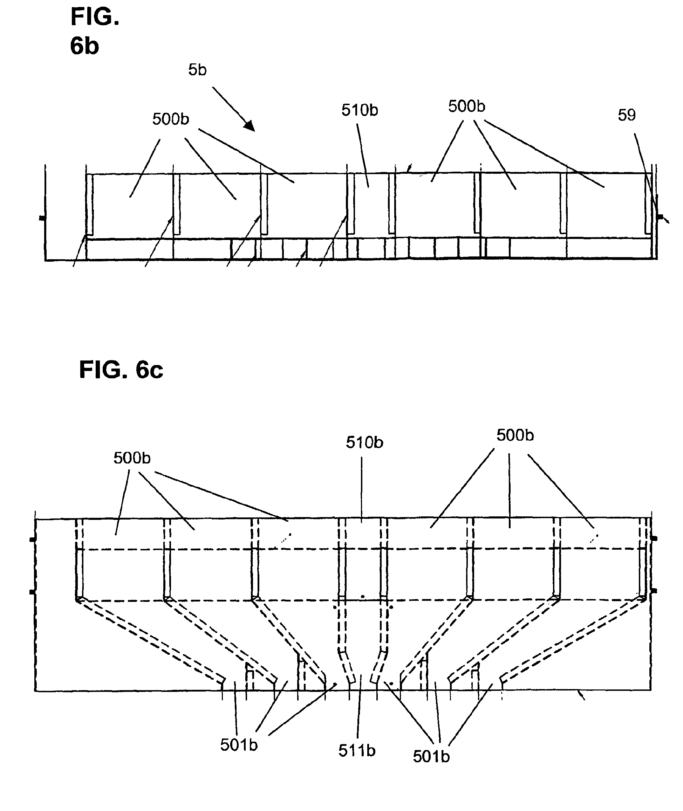

Un deuxième type de tiroir-caisse (2b) est présenté en figure 5. Ce tiroir-caisse (2b) comprendra, par exemple, un couvercle (21 b) refermable à clé (22b). Il comprend également deux rangées (r1, r2) de compartiments (20b). Une première rangée (r1) comprend quatre compartiments et une deuxième rangée (r2) comprend six compartiments (20b). La première rangée comprendra, par exemple, deux compartiments (20b) centraux identiques pris entre deux compartiments (23b) de taille plus importante pour stocker, par exemple, les billets de banque. Les six compartiments (20b) de la deuxième rangée (r2) et les deux compartiments (20b) de la première rangée (r1) sont destinés à recevoir des pièces de monnaie provenant des trémies (4). Les goulottes de distribution seront, selon l'invention, agencées pour alimenter ces compartiments (20b) du tiroir-caisse (2b). Le bloc de distribution (5b), représenté en figures 6a, 6b et 6c, comprendra une goulotte (51b) pour alimenter les deux compartiments (20b) de la première rangée (r1) et six goulottes (50b) pour alimenter les compartiments (20b) de la deuxième rangée (r2). Les entrées (500b, 510b) des goulottes (50b, 51b) sont adjacentes, alignées et placées chacune en vis-à-vis de la sortie (40) d'une trémie (4). La goulotte (51b) alimentant les deux compartiments (20b) de la première rangée (r1) est centrale. La sortie (511b) de cette goulotte (51b) centrale est décalée par rapport aux autres sorties (501b) des goulottes pour pouvoir alimenter les compartiments (20b) de la première rangée (r1) du tiroir-caisse (2b). La deuxième rangée (r2) du tiroir-caisse (2b) sera, par exemple, la première introduite dans le logement (103) prévu pour le positionnement du tiroir-caisse (2b). La sortie (511b) de la goulotte (51 b) centrale est décalée vers l'extérieur lorsque le bloc de distribution (5b) est accroché par le système d'accrochage (105) dans la première partie (10) du distributeur. Cette goulotte (51b) centrale aura, du fait qu'elle alimente les deux compartiments (20b) de la première rangée (r1) du tiroir-caisse (2b), une sortie (511b) de section plus importante que les autres sorties (501 b) des goulottes (50b) donnant chacune seulement sur un compartiment (20b) du tiroir-caisse (2b).

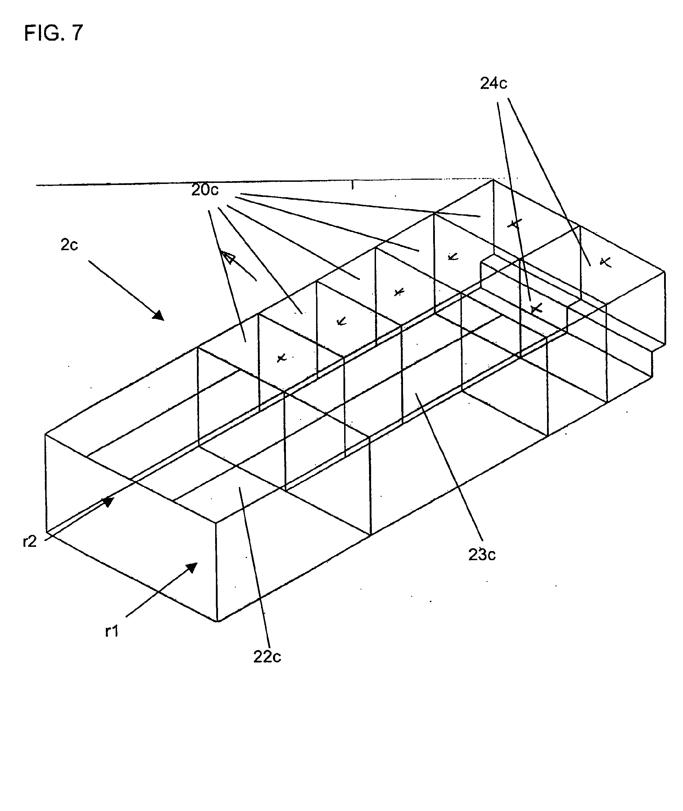

Un troisième type de tiroir-caisse (2c), représenté en figure 7, comprend également deux rangées (r1, r2) de compartiments. Les deux rangées comprennent un grand compartiment (22c) commun. Une première rangée (r1) comprend en plus de ce compartiment (22c) commun, trois autres compartiments alignés. Parmi ces trois compartiments, deux (24c) sont identiques et un dernier (23c) est de taille plus importante que les deux autres. La deuxième rangée (r2) comprend, en plus du compartiment commun, cinq compartiments (20c) adjacents identiques. Ce sont ces cinq derniers compartiments (20c) qui sont alimentés par les trémies (4) du distributeur (1) par l'intermédiaire des goulottes agencées en bloc. Le bloc de distribution (5c) comprendra, selon l'invention, quatre entrées (500c, 510c) adjacentes. Selon l'invention, le bloc de distribution (5c) comprendra trois entrées (500c) de goulottes (50c) de sections identiques, deux de ces entrées étant à une extrémité et l'autre de ces entrées étant à l'autre extrémité du bloc de distribution (5c). Ce groupe de deux goulottes placé à une extrémité et cette goulotte placée à l'autre extrémité sont séparés par la dernière goulotte (51c) ayant une entrée (510c) à section plus importante pour recueillir des pièces de monnaie provenant de plusieurs trémies (4) du distributeur (1), par exemple provenant de quatre trémies (4) du distributeur. Les sorties (501c, 511c) de ces goulottes (50c, 51c) sont également adjacentes et alignées et sont au nombre de cinq, chacune étant placée au-dessus d'un compartiment (20c) du tiroir-caisse (2c) à alimenter. La sortie (511) de la goulotte (51c) à entrée élargie selon l'invention est séparée en deux sorties distinctes pour alimenter deux compartiments (20c) distincts du tiroir-caisse (2c). Ces deux compartiments du tiroir caisse pourront comprendre chacun, par exemple, deux catégories de pièces de monnaie provenant de deux trémies (4) du distributeur (1). Le distributeur (1) peut également disposer de plusieurs trémies (4) comprenant la même catégorie de pièces.

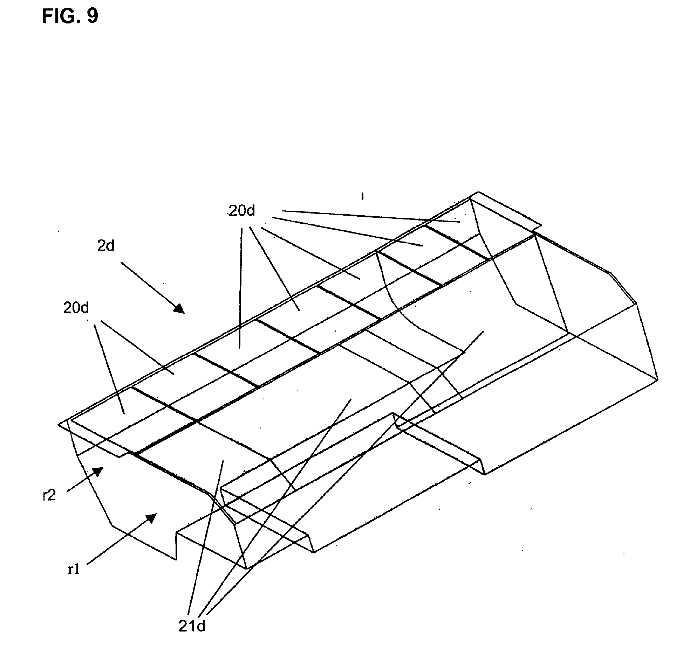

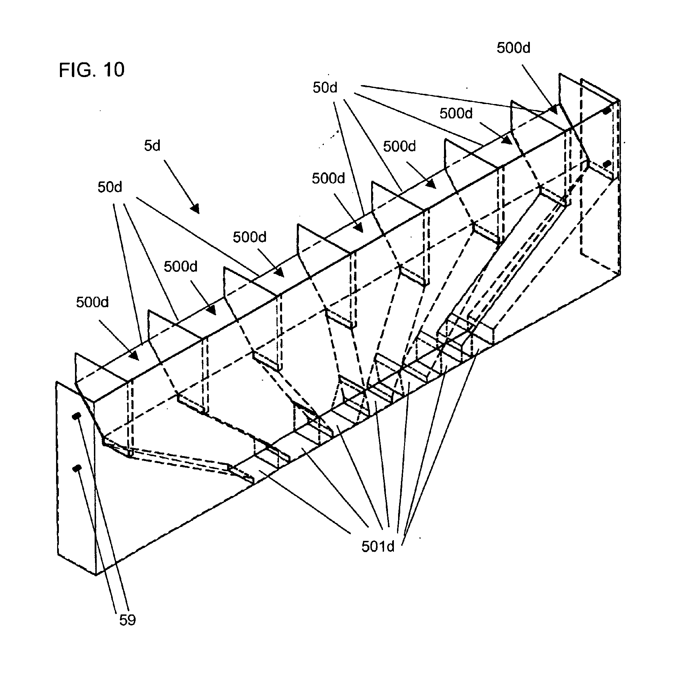

Un dernier type de tiroir-caisse (2d), représenté en figure 9, comprendra principalement deux rangées (r1, r2) de compartiments. Une première rangée (r1) comprend des compartiments (21d) de taille importante pour stocker les billets de banque et autres reçus de carte bancaire. Une deuxième rangée (r2), pour stocker les pièces de monnaie, comprend, comme représenté sur la figure 9, sept compartiments (20d) identiques adjacents et alignés. Selon l'invention le bloc de distribution (5d) pour alimenter les compartiments du tiroir-caisse comportera sept goulottes, comme représenté en figure 10. Les goulottes (50d) seront, selon l'invention, agencées de manière à alimenter ces sept compartiments (20d). Le distributeur (1) comprendra, comme décrit plus haut, par exemple sept trémies (4), comme représenté en figure 2. Une trémie (4), comprenant une catégorie de pièces de monnaie, alimentera un compartiment (20d) du tiroir-caisse (2) par l'intermédiaire d'une goulotte (50d) du bloc de distribution (5d). Selon l'invention, les goulottes disposeront d'entrées (500d) adjacentes alignées, chacune en vis-à-vis de la sortie (40) d'une trémie (4) et de sorties (501d), également adjacentes et alignées, donnant chacune sur un compartiment (20d) différent du tiroir-caisse (2d).

Selon l'invention, tous ces blocs de distribution (5a, 5b, 5c, 5d) sont de mêmes dimensions pour pouvoir être accrochés dans le distributeur (1) sous l'ensemble des trémies (4). Le bloc de distribution (5a, 5b, 5c, 5d) est amovible du distributeur (1) et interchangeable en fonction du type de tiroir-caisse (2a, 2b, 2c, 2d) à alimenter. Le bloc de distribution (5a, 5b, 5c, 5d) sera positionné par le système d'accrochage (105) dans le distributeur (1) sans toucher à la structure interne ou externe du distributeur (1). Selon l'invention, il sera donc possible d'adapter le distributeur à l'alimentation de n'importe quel type de tiroir-caisse en changeant uniquement le bloc de distribution. Les différents types de tiroir-caisse et de blocs de distribution présentés ci-dessus ne sont aucunement limitatifs, d'autres tiroirs-caisses pouvant être envisagés en association avec d'autres blocs de distribution adaptés.

Selon l'invention, le distributeur (1) comprend une deuxième partie (11) destinée à la distribution d'enveloppes comprenant des billets de banque. Cette deuxième partie, représentée en figure 1 et en vue de dessus, en figure 2b, comprendra, comme la première partie, un capot (110) amovible pour approvisionner le distributeur (1) en enveloppes. La distribution d'enveloppes pourra, par exemple, être assurée par deux ressorts (111) identiques, ayant des axes parallèles compris dans un plan horizontal. Ces deux ressorts (111) sont placés à l'intérieur de la deuxième partie (11) du distributeur (1). Ces deux ressorts (111) ont une de leurs extrémités située à proximité du fond de la deuxième partie (11) du distributeur (1). Par cette extrémité, chaque ressort (111) est actionné en rotation par un moteur (non représenté). Les deux ressorts (111) sont actionnés simultanément dans le même sens, par exemple, par le même moteur. Juste sous ces ressorts est placée une surface (112) de support comprise dans un plan horizontal sensiblement parallèle au plan comprenant les axes des ressorts (111). Chaque enveloppe (113) est destinée à être posée sur une de ses arêtes sur la surface de support, dans l'espace laissé entre deux spires adjacentes de chaque ressort (111), comme représenté en figure 2b. Les ressorts (111) sont d'une longueur (L) plus importante que la longueur de la surface de support. La rotation d'un certain angle des ressorts (111), effectuée à l'aide du moteur, provoque l'avancée des enveloppes (113) situées entre les spires. Lorsqu'une enveloppe (113) se trouve au delà de l'extrémité de la surface (112) de support, celle-ci tombe dans une glissière (114) qui l'achemine vers un logement (115) de réception situé en bas du distributeur (1) et constitué d'un trou formé dans le capot (110) de la deuxième partie (11) du distributeur (1). L'angle de rotation des ressorts (111) pourra être choisi, par exemple, de sorte que, à chaque rotation, seulement une enveloppe (113) tombe dans la glissière (114).

Selon l'invention, le distributeur (1) est commandé par un système informatique (3) exécutant un logiciel de gestion de la distribution des pièces et des enveloppes.

Ce système informatique (3) pourra gérer plusieurs distributeurs du type de l'invention en même temps.

Ce logiciel permettra de gérer la distribution de fonds de caisse et de réassorts.

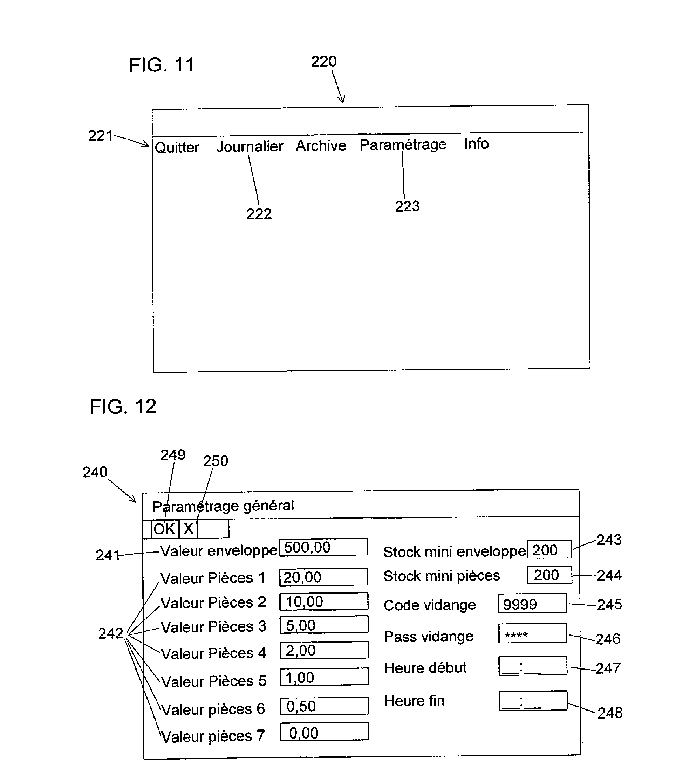

Un écran (220) principal, représenté en figure 11, permet d'accéder aux différentes fonctionnalités du logiciel. Pour cela, cet écran (220) comprendra un bandeau (221) d'onglets qu'il est possible de sélectionner. Cette sélection pourra être effectuée, par exemple, par un click souris sur l'onglet souhaité. Ce bandeau (221) comprendra, par exemple, un onglet, dénommé, par exemple, "Paramétrage" (223) permettant de paramétrer la distribution des pièces ou des enveloppes. En cliquant sur cet onglet, il sera possible de paramétrer le logiciel. Tout d'abord, un paramétrage général pourra être effectué dans une fenêtre d'écran représentée schématiquement en figure 12. Cette fenêtre d'écran (240) comprendra plusieurs champs de saisie de paramètres à mémoriser dans une base de données.
- Un premier paramètre à saisir, par exemple à l'aide du clavier, concernera la valeur (241) en argent incluse dans une enveloppe. Sur la figure 12, la valeur d'une enveloppe est de 500,00.
- L'automate comportera, par exemple, sept trémies (4) de stockage de pièces de monnaie. Dans chaque trémie (4), on stockera une catégorie de pièces. Un paramètre à saisir (242) sera donc la valeur unitaire des pièces introduites dans chaque trémie. Cette saisie (242) sera effectuée sur la fenêtre d'écran (240) de paramétrage général. Par exemple, dans cette fenêtre (240) nous choisirons que dans une première trémie, seront introduites des pièces ayant une valeur de 20,00, dans une deuxième trémie, des pièces de 10,00, dans une troisième trémie, des pièces de 5,00, dans une quatrième trémie, des pièces de 2,00, dans une cinquième trémie, des pièces de 1,00, dans une sixième trémie, des pièces de 0,50, et dans la septième trémie, aucune pièce ne sera introduite.
- Un autre paramètre à saisir sera la valeur minimale du stock d'enveloppes (243) en dessous de laquelle devra être affiché un message d'alerte. Ce message précisera, par exemple, qu'il faut réapprovisionner l'automate en enveloppes.
- De même, pour toutes les trémies de pièces, une valeur minimale du stock de pièces (244) comprise dans les trémies est saisie. En dessous de cette valeur, un message d'alerte sera affiché. Ce message précisera qu'il faut réapprovisionner la trémie pour laquelle l'alerte est activée.
- deux autres paramètres à saisir seront, par exemple, un code (245) et un mot de passe (246), nécessaires pour effectuer la vidange de l'automate. La saisie de ce code à l'aide du clavier (101) sur l'automate suivi d'une sélection de retrait de fond de caisse provoque la vidange complète de l'automate.
- Enfin, les derniers paramètres à saisir sont une heure de début (247) et une heure de fin (248), la durée entre ces deux heures définissant la tranche horaire pendant laquelle les hôtesses ou les hôtes de caisse sont autorisés à retirer des fonds de caisse ou des réassorts.

La validation de ces paramètres sera, par exemple, réalisée en cliquant sur un icône (249) dénommé, par exemple "OK". La sélection à l'aide de la souris d'un autre icône (250) permettra d'annuler ce paramétrage et de conserver le paramétrage antérieur.

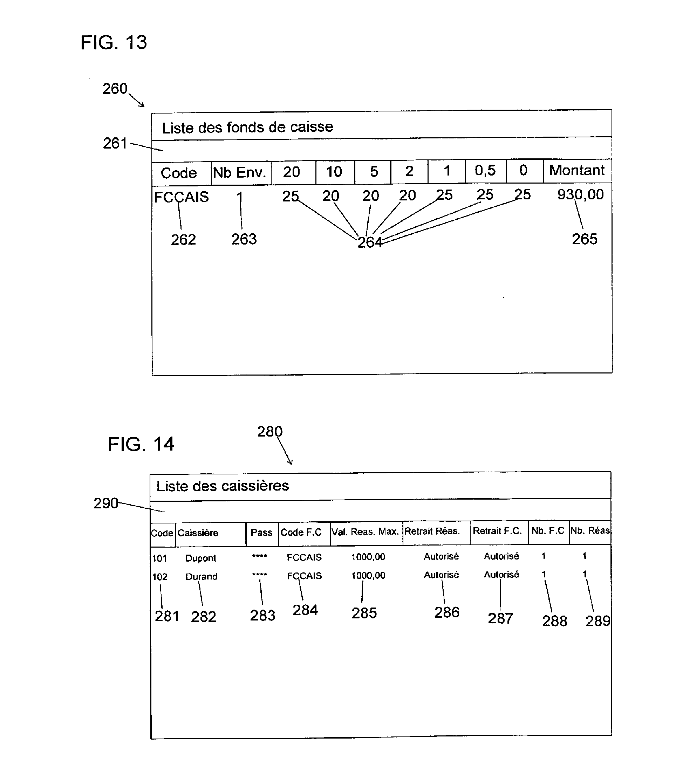

Un deuxième paramétrage consistera à saisir les paramètres liés à la liste des fonds de caisse pour les stocker dans une base de données (db1) mémorisée sur le système informatique (3). Dans une fenêtre d'écran (260) spécifique, représentée en figure 13, il sera possible de paramétrer un ou plusieurs types de fond de caisse. Le paramétrage d'un fond de caisse consiste à choisir le nombre d'enveloppes et le nombre de pièces de chaque valeur que l'on souhaite distribuer pour ce fond de caisse. Des hôtesses ou hôtes de caisse pourront disposer d'un fond de caisse différent. Plusieurs fonds de caisse différents pourront être ajoutés en cliquant sur un icône spécifique d'un bandeau (261) d'icônes. Un premier paramètre à saisir est le code (262) permettant d'identifier le fond de caisse. Ensuite, il faudra saisir le nombre d'enveloppes (263) que l'on souhaite affecter à ce fond de caisse. Ensuite, il faudra affecter le nombre de pièces (264) que l'on souhaite distribuer dans chaque catégorie de pièces. Le montant total (265) du fond de caisse sera calculé automatiquement. Il sera possible également de supprimer un fond de caisse existant en sélectionnant la ligne correspondant au fond de caisse que l'on veut supprimer et en cliquant sur un icône spécifique de suppression du bandeau (261) d'icônes.

Ensuite il faut attribuer à chaque hôtesse ou hôte de caisse un fond de caisse et la valeur maximale de réassort qu'elle peut retirer. Une base de données (db2) spécifique mémorisée sur une mémoire (M) du système informatique est chargée de stocker ces valeurs en relation avec le nom de l'hôtesse ou de l'hôte de caisse. Dans cette base de données (db2) visualisée dans une fenêtre d'écran (280) représentée en figure 14, un code d'identification (281) différent est saisi pour identifier chaque hôtesse ou hôte de caisse. A ce code d'identification (281) est associé le nom (282) de l'hôtesse ou de l'hôte de caisse. Chaque hôtesse ou hôte de caisse dispose d'un mot de passe (283) qui sera mémorisé dans la base de données (db2). Ce mot de passe (283) correspond à un code que l'hôtesse ou l'hôte de caisse sera amené à saisir sur le clavier (101) du distributeur (1) pour disposer de son fond de caisse ou de réassort. Ce mot de passe (283) pourra être modifié par l'hôtesse ou l'hôte de caisse à partir du clavier (101) du distributeur (1). Ensuite, dans la base de données (db2), on affecte à chaque hôtesse ou hôte de caisse un code d'un fond de caisse (284) préalablement paramétré, comme décrit ci-dessus. Chaque hôtesse ou hôte de caisse pourra disposer de réassort. La valeur maximale de réassort (285) dont l'hôtesse ou l'hôte de caisse pourra disposer, est saisie sur cette fenêtre d'écran (280). Il est possible également de paramétrer si l'hôtesse ou l'hôte de caisse est autorisé (286, 287) à disposer de réassort ou à retirer son fond de caisse. Ceci permet donc de pouvoir bloquer momentanément pour au moins une hôtesse ou un hôte de caisse, la demande de réassort ou de retrait du fond de caisse. Il sera possible de paramétrer le nombre de fonds de caisse (288) que l'hôtesse ou l'hôte de caisse peut retirer dans une journée. Il sera également possible de paramétrer le nombre de réassorts (289) dont l'hôtesse ou l'hôte de caisse peut disposer dans une journée.

Il sera possible de supprimer une hôtesse ou un hôte de caisse de la liste en cliquant sur un icône spécifique d'un bandeau (290) d'icônes.

Selon l'invention, il sera également possible dans une fenêtre d'écran (non représentée) de paramétrer le port série du système informatique sur lequel est connecté l'automate de distribution. II sera possible dans cette fenêtre, de spécifier pour chaque valeur de pièce, le numéro de la trémie qui est affecté à cette valeur. Une même catégorie de pièces peut être distribuée sur plusieurs trémies. En revanche, une trémie ne pourra pas comprendre des pièces de valeurs différentes.

La validation de tous ces paramètres est, par exemple, réalisée en cliquant sur un icône dénommé, par exemple, "OK".

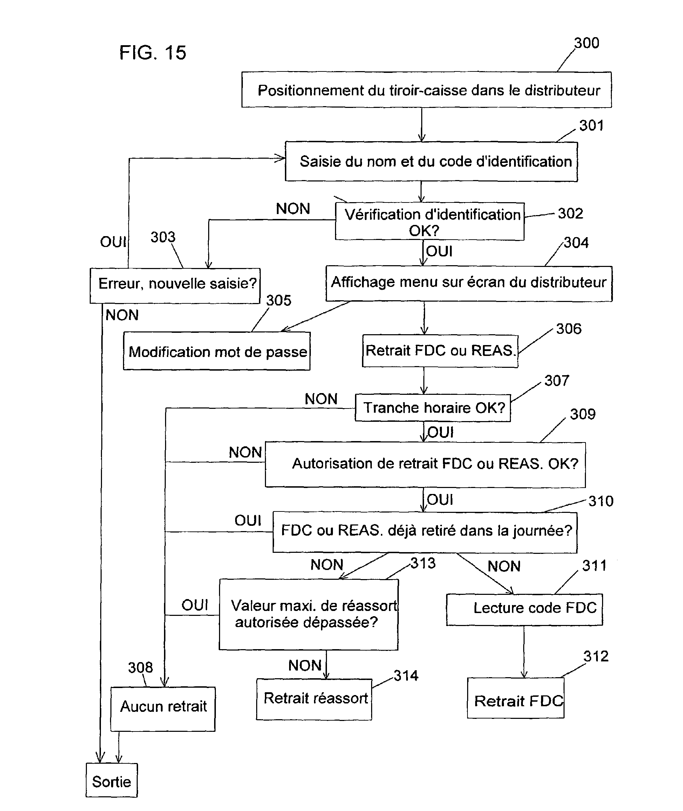

Une fois que tout est paramétré, l'hôtesse ou l'hôte de caisse doit opérer de la manière suivante dont un organigramme est représenté en figure 15, s'il souhaite disposer de son fond de caisse ou de réassort. Le distributeur est fermé et connecté au système informatique (3) qui le commande. Chaque trémie (4) est remplie de pièces de monnaie d'une certaine catégorie de pièces. Le bloc de distribution (5a, 5b, 5c, 5d) incorporé au distributeur (1) est celui adapté au type de tiroir-caisse (2a, 2b, 2c, 2d) à alimenter. L'hôtesse ou l'hôte de caisse commencera dans une première étape (300) par positionner son tiroir-caisse (2a, 2b, 2c, 2d) dans le logement (103) prévu dans le distributeur (1), comme représenté en figure 1. L'hôtesse ou l'hôte de caisse saisit dans une deuxième étape (301), à l'aide du clavier (101), son code d'identification sur l'écran (102, 107) du distributeur ainsi que son mot de passe. Le système informatique (3) identifie l'hôtesse de caisse ou l'hôte de caisse en allant vérifier (302) le code d'identification et le mot de passe associé dans la base de données (db2) comprenant en particulier la liste des hôtesses ou hôtes de caisse et le fond de caisse qui leur est associé. Dans le cas où le code d'identification de l'hôtesse ou de l'hôte de caisse, son mot de passe ou les deux, sont faux, une erreur (303) est générée et un message d'erreur est affiché sur l'écran (102, 107) du distributeur (1). Ce message pourra proposer, par exemple, de recommencer la saisie. En revanche, si le code d'identification et le mot de passe associé sont trouvés dans la base de données (db2), le système (3) commande l'affichage (304) d'un menu sur l'écran (102, 107) du distributeur (1). Ce menu pourra comprendre, par exemple, trois options. Une première option sera, par exemple, le retrait du fond de caisse. Une deuxième option sera, par exemple, le retrait de réassort et une troisième option consistera en la modification (305) du mot de passe.

Dans le cas où l'hôtesse ou l'hôte de caisse choisit la première ou la deuxième option (306), le système informatique (3) consulte les différentes bases de données (db1, db2). Le système informatique (3) doit d'abord regarder si l'hôtesse ou l'hôte de caisse se trouve dans la tranche horaire (307) paramétrée pour pouvoir effectuer l'un de ces retraits. Si ce n'est pas le cas, aucun retrait (308) ne sera possible. Si c'est le cas, le système informatique (3) devra aller consulter la base de données (db2) de la liste des hôtesses ou hôtes de caisse et regarder si l'hôtesse ou l'hôte de caisse est autorisé à retirer son fond de caisse ou du réassort (309). Si l'hôtesse ou l'hôte de caisse n'est pas autorisé, alors aucun retrait (308) ne sera possible, le système informatique (3) bloquera alors le processus de retrait. Si l'hôtesse ou l'hôte de caisse est autorisé, il faudra encore vérifier si l'hôtesse ou l'hôte de caisse n'a pas déjà retiré son nombre de fonds de caisse ou de réassort autorisé par jour (310). Si c'est le cas, le système informatique (3) bloquera le processus de retrait (308). Si ce n'est pas le cas le système informatique (3) a deux possibilités suivant que l'hôtesse de caisse ou l'hôte de caisse souhaite retirer un fond de caisse ou obtenir du réassort. Dans le premier cas, le système informatique (3) lit dans la base de données le code du fond de caisse (311) associé à l'identifiant de l'hôtesse ou de l'hôte de caisse. Le système informatique (3) cherche alors dans la base de données (db1) ce code de fond de caisse. Une fois qu'il a trouvé ce code dans la base de données (db1), le système lit les valeurs définissant ce fond de caisse. Ces valeurs seront le nombre d'enveloppes à distribuer pour ce fond de caisse et le nombre de pièces à distribuer dans chaque catégorie de pièces. Le système informatique commande alors le distributeur pour la distribution des enveloppes et des pièces (312). Dans le deuxième cas (313), c'est à dire dans le cas où l'hôtesse ou l'hôte de caisse souhaite retirer du réassort, le système informatique (3) devra lire dans la base de données (db2) si l'hôtesse ou l'hôte de caisse n'a pas déjà retiré la valeur maximale de réassort autorisée (313). Si c'est le cas, aucun retrait (308) ne sera possible. En revanche si ce n'est pas le cas, l'hôtesse ou l'hôte de caisse pourra saisir la quantité de réassorts (314) qu'il souhaite retirer, celle-ci ne devant pas excéder la valeur maximale autorisée.

La distribution des pièces sera gérée entièrement par le logiciel de gestion. En particulier, selon l'invention, chaque trémie comportera à proximité de sa sortie un compteur du nombre de pièces éjectées. Ce compteur sera, par exemple, constitué d'une cellule photoélectrique détectant le passage de chaque pièce éjectée. Le comptage effectué sera pris en compte immédiatement par le logiciel qui débitera automatiquement ce qui a été réellement distribué.

Selon l'invention, l'écran principal comprend un onglet, par exemple dénommé "Journalier" (222), qui, lorsqu'il est activé, permet de visualiser des opérations qui ont été effectuées par les utilisateurs de l'automate depuis un certain temps, par exemple, dans la journée.

Selon une variante, le distributeur d'enveloppes intégré à la deuxième partie (11) pourra être remplacé par un module (12) distributeur automatique de billets (D.A.B.). En effet, la présence des billets sous enveloppes oblige à distribuer toujours le même montant à toutes les hôtesses ou hôtes de caisse. En revanche, selon cette variante, les billets seront stockés en vrac et pourront être délivrés à l'unité, et non plus sous enveloppe. II sera donc possible d'affecter à chaque hôtesse ou hôte de caisse, la valeur en billets que l'on souhaite distribuer. La deuxième partie (11) du distributeur (1) comprendra un module (12) de distribution utilisant une ou plusieurs cassettes, par exemple deux cassettes (121, 122), contenant chacune une seule catégorie de billet. La deuxième partie (11) du distributeur comprendra alors des moyens de prélèvement dans une cassette et d'acheminement des billets, par exemple constitués de rouleaux permettant d'acheminer les billets vers l'extérieur. Ces moyens (12) de distribution de billets, comme pour les pièces, pourront comprendre une cellule de comptage du nombre de billets réellement distribué, cette valeur étant reportée dans le système informatique (3). Le système informatique (3) ne mémorisera plus dans sa base de données (db1) le nombre d'enveloppes à distribuer mais le nombre de billets que le distributeur (1) doit délivrer pour chaque catégorie de billets. Les billets seront ainsi traités comme les pièces et la manière de procéder du système informatique (3) sera similaire à celle utilisée pour la distribution des pièces. Le distributeur délivrera donc le nombre de billets mémorisé pour chaque catégorie de billets. Selon cette variante, la capacité de stockage des billets sera plus importante que celle des enveloppes. Le distributeur de billets pourra stocker jusqu'à 4000 billets de banque.

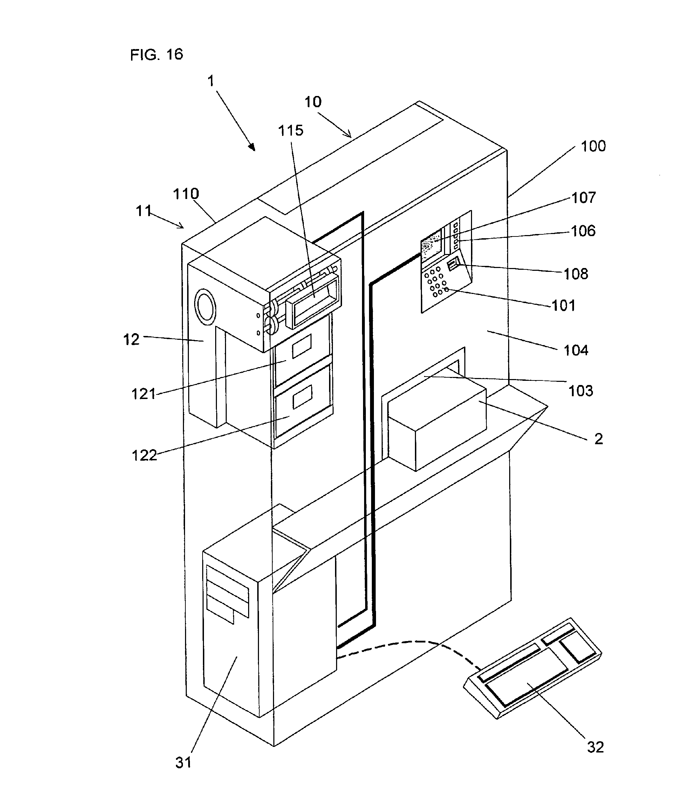

Dans une variante représentée en figure 16, tout ou partie du système informatique (3) est renfermé à l'intérieur du distributeur (1), par exemple sous la forme d'un micro-ordinateur (31) d'un modèle courant. Dans cette variante, l'écran incorporé au distributeur présente des caractéristiques d'affichage graphique suffisante pour pouvoir afficher l'ensemble des menus de gestion utilisés par le système informatique et décrits plus haut. L'écran utilisé peut être par exemple un écran (107) à matrice active de type TFT. Ces écrans comportent en particulier des fenêtres graphiques utilisant les menus, icônes, et contrôles graphiques et issues d'une interface graphique interactive telle que Windows (marque déposée) de la société Microsoft, MacOS de la société Apple, ou X-Windows de la société Sun (marques déposées). Certains de ces écrans peuvent afficher des choix à effectuer par l'utilisateur sous forme de repères graphiques situés sur le bord de l'écran, en regard de boutons (106) externes présents sur le bord de l'écran. Ces boutons externes peuvent servir à l'utilisateur pour effectuer une sélection rapide parmi des choix proposés par un affichage généré par le logiciel, par exemple un type d'opération ou un montant parmi plusieurs à retirer.

En plus des boutons (106) externes et du clavier (101) intégré au distributeur (1), cette variante de l'automate selon l'invention comprend un clavier (32) externe indépendant permettant la saisie de toutes les données ou informations nécessaires au fonctionnement du micro-ordinateur (31). Ce clavier indépendant est d'un type courant pour le micro-ordinateur utilisé, par exemple un clavier informatique standard à 89 touches ou un clavier informatique standard à 103 ou 104 touches. Ce clavier indépendant est en communication avec le micro-ordinateur (31) renfermé à l'intérieur du distributeur (1) par une liaison sans fil de type radio ou infra-rouge, ou par une connexion classique par un fil pouvant être débranché et rebranché facilement sans ouvrir le distributeur (1). Ainsi, une personne chargée peut s'approcher du distributeur (1) avec ce clavier (32) externe et réaliser une quelconque opération de paramétrage ou d'interrogation du système informatique (3) sans avoir besoin d'ouvrir le distributeur (1).

L'ordinateur (31) situé à l'intérieur du distributeur (1) est prévu pour pouvoir communiquer avec au moins un système informatique extérieur au distributeur (1), gérant par exemple la comptabilité d'une chaîne de magasins équipés de ce type de distributeurs. Cette communication peut se faire par une connexion permanente ou temporaire, par exemple par un réseau informatique ou par une liaison téléphonique et un modem, ou toute autre liaison numérique.

Le distributeur (1), ou le clavier (32) externe, peut également comporter un terminal apte à communiquer avec un objet portable informatisé comprenant un circuit électronique, ou un microprocesseur, ou mémorisant des informations informatiques, par exemple un lecteur (108) de carte à puce. Ce lecteur permet alors de réaliser des opérations d'authentification ou de chiffrement lors de l'utilisation de l'automate, directement sur le distributeur (1) ou lors d'opérations commandées à l'aide du clavier (32) externe.

Ainsi, l'invention propose un automate de préparation et de distribution de fonds de caisse et de monnaie sous la forme de pièces et billets comprenant un distributeur (1) couplé à un système informatique (3), caractérisé en ce que le distributeur (1) comprend des moyens de stockage de pièces de monnaie, des moyens d'éjection des moyens de stockage de pièces de monnaie, des moyens d'acheminement des pièces de monnaie éjectées vers des compartiments d'un tiroir-caisse (2), des moyens (12) de distribution de billets de banque depuis des moyens de stockage de billets vers un poste de réception (115).

Selon une particularité, les moyens de distribution de billets sont aptes à prélever des billets de façon unitaire dans les moyens de stockage de billets.

Selon une particularité, les moyens de stockage de billets comprennent au moins deux postes (121, 122) de stockage contenant chacun un type différent de billets.

Selon une particularité, le dispositif comprend un compteur du nombre de pièces éjectées de chaque type, ou de billets extraits de chaque type.

Selon une particularité, les moyens de stockage de pièces sont constitués d'une pluralité de trémies (4), chaque trémie (4) étant dédiée à un type de pièces de monnaie, le compteur comprenant au moins une cellule photoélectrique placée en sortie de chaque trémie (4) ou poste (121, 122) de stockage de billets, cette cellule détectant le nombre de pièces éjectées de la trémie (4) par les moyens d'éjection ou le nombre de billets extraits du poste (121, 122) de stockage par les moyens de distribution de billets.

Selon une particularité, le système informatique (3) comprend des moyens de recherche d'un identifiant saisi sur des moyens de saisie de l'automate et du fond de caisse associé à cet identifiant, des moyens de lecture pour le fond de caisse trouvé, du nombre de pièces à distribuer pour chaque catégorie de pièces ou de billets, des moyens de commande commandant au distributeur de distribuer en même temps, pour chaque catégorie de pièces ou de billets, le nombre de pièces ou de billets lu.

Selon une particularité, le système informatique (3) comprend des moyens de paramétrage d'au moins un fond de caisse, d'un identifiant (281) de la caissière associée au fond de caisse (284), de l'autorisation ou non du retrait de monnaie par la caissière, si oui, de la valeur du retrait maximum de monnaie autorisé, du nombre de fonds de caisse (288) que la caissière peut retirer par jour, du nombre de réassorts (289) dont la caissière peut disposer dans une journée.

Selon une particularité, le système informatique (3) comprend des moyens de paramétrage de la tranche horaire (247, 248) pendant laquelle les caissières sont autorisées à retirer des fonds de caisse et des moyens de blocage des retraits de fond de caisse en dehors de cette tranche horaire.

Selon une particularité, le système informatique (3) comprend un ordinateur, dit ordinateur (31) interne, situé à l'intérieur du distributeur (1).

Selon une particularité, l'ordinateur (31) interne est apte à communiquer avec un clavier (32) extérieur au distributeur (1), par l'intermédiaire d'une connexion électrique temporaire ou de moyens de communication sans fil, sans nécessiter l'ouverture du distributeur (1).

Selon une particularité, le distributeur (101) ou le clavier (32) extérieur comprend des moyens (108) de communication avec un objet portable informatisé comprenant un circuit électronique ou mémorisant des données informatiques.

Selon une particularité, l'ordinateur (31) interne est apte à communiquer avec au moins un système informatique extérieur au distributeur, par l'intermédiaire d'un réseau informatique ou d'une liaison informatique permanente ou temporaire.

Selon une particularité, le système informatique (3) comprend un ordinateur utilisant un système d'exploitation fonctionnant selon une interface graphique interactive pour mettre en oeuvre les moyens de recherche, ou des moyens de lecture, ou des moyens de commande, ou des moyens de paramétrage, ou une combinaison de ces moyens.

Selon une particularité, les moyens d'acheminement de pièces comprennent une pluralité de goulottes (50) assemblées pour former un seul bloc (5), chaque goulotte (50) comprenant une entrée communiquant avec une trémie (4) et une sortie communiquant avec un seul compartiment du tiroir-caisse (2) à alimenter, ce bloc (5) étant amovible et prévu pour être positionné par des moyens de solidarisation dans le distributeur, ces moyens de solidarisation pouvant recevoir plusieurs modèles différents de blocs (5) choisis en fonction du type de tiroir-caisse (2) à alimenter.

Dans le même esprit, l'invention propose également un procédé de préparation et de distribution de fonds de caisse et de monnaie sous la forme de billets ou pièces, caractérisé en ce qu'il comprend les étapes suivantes :
- saisie d'un code personnel,
- identification par un système informatique (3) du code,
- recherche dans une base de données mémorisée, du fond de caisse associé au code saisi,
- lecture par des moyens de lecture du système informatique (3) du fond de caisse trouvé et comprenant le nombre d'enveloppes comprenant des billets de banque à distribuer, ou le nombre de billets de banque à distribuer pour chaque type de billet, ainsi que le nombre de pièces à distribuer pour chaque type de pièces,
- commande par le système informatique (3) d'un distributeur (1) distribuant des fonds de caisse pour délivrer ce nombre d'enveloppes, ou ce nombre de billets pour chaque type de billets, et pour éjecter ce nombre de pièces pour chaque type de pièces,
- acheminement, pour chaque type de pièces, des pièces éjectées vers un compartiment particulier d'un tiroir-caisse.

Selon une particularité, le procédé comprend une étape de comptage, pour chaque type de pièce ou de billet, des quantités de pièces ou de billets réellement distribuées et une étape de report de ces quantités sur le système informatique (3) pour les déduire des quantités mémorisées de pièces ou de billets stockées dans le distributeur (1).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Automate de préparation et de distribution de fonds de caisse et de monnaie, sous la forme de pièces, comprenant un distributeur (1) qui comprend des moyens de stockage de pièces de monnaie, des moyens d'éjection des moyens de stockage de pièces de monnaie, des moyens d'acheminement des pièces de monnaie éjectées vers des compartiments d'un tiroir-caisse (2), **caractérisé en ce que** le distributeur (1) est couplé à un système informatique (3) comprenant :
- des moyens de paramétrage d'au moins un fond de caisse, les moyens de paramétrage permettant, par l'intermédiaire d'une interface de saisie de l'automate, de paramétrer la distribution des pièces en mémorisant pour chaque fond de caisse un paramètre représentatif du nombre de pièces à distribuer pour chaque catégorie de pièces,
- des moyens de paramétrage d'au moins un utilisateur, les moyens de paramétrage permettant, par l'intermédiaire d'une interface de saisie de l'automate, d'associer des paramètres propres à chaque utilisateur,
- une base de données (db1) pour stocker les paramètres liés à la liste des fonds de caisse et permettre de lister des fonds de caisse de différents types ;
- une base de données (db2) pour stocker les paramètres associés à chaque utilisateur ;
- des moyens de recherche d'un identifiant saisi via l'interface de saisie et du fond de caisse associé à cet identifiant ;
- des moyens de lecture, pour le fond de caisse trouvé, du nombre de pièces à distribuer mémorisé pour chaque catégorie de pièces ; et
- des moyens de commande commandant au distributeur (1) de distribuer en même temps pour chaque catégorie de pièces, le nombre de pièces lu;
les moyens d'acheminement de pièces comprenant une pluralité de goulottes (50) assemblées pour former un seul bloc (5), chaque goulotte (50) comprenant une entrée communiquant avec une trémie (4) et une sortie communiquant avec un seul compartiment du tiroir-caisse (2) à alimenter, ce bloc (5) étant amovible et prévu pour être positionné par des moyens de solidarisation dans le distributeur, ces moyens de solidarisation pouvant recevoir plusieurs modèles différents de blocs (5) choisis en fonction du type de tiroir-caisse (2) à alimenter.

2. Automate selon la revendication 1, **caractérisé en ce que** les fonds de caisse peuvent également se présenter sous la forme de billets ou d'enveloppes, grâce à la présence, dans le distributeur (1), de moyens (12) de distribution de billets de banque depuis des moyens de stockage de billets vers un poste de réception (115), les moyens de distribution de billets étant aptes à prélever des billets de façon unitaire dans les moyens de stockage de billets.

3. Automate selon la revendication 2, **caractérisé en ce que** les moyens de stockage de billets comprennent au moins deux postes (121, 122) de stockage contenant chacun un type différent de billets.

4. Automate selon l'une des revendications 2 à 3, **caractérisé en ce qu'**il comprend un compteur du nombre de pièces éjectées de chaque type, ou de billets extraits de chaque type.

5. Automate selon la revendication 4, **caractérisé en ce que** les moyens de stockage de pièces sont constitués d'une pluralité de trémies (4), chaque trémie (4) étant dédiée à un type de pièces de monnaie, le compteur comprenant au moins une cellule photoélectrique placée en sortie de chaque trémie (4) ou poste (121, 122) de stockage de billets, cette cellule détectant le nombre de pièces éjectées de la trémie (4) par les moyens d'éjection ou le nombre de billets extraits du poste (121, 122) de stockage par les moyens de distribution de billets.

6. Automate selon la revendication 2, **caractérisé en ce que** le système informatique (3) comprend des moyens de lecture pour le fond de caisse trouvé, du nombre de billets à distribuer pour chaque catégorie de billets, des moyens de commande commandant au distributeur de distribuer en même temps, pour chaque catégorie de de billets, le nombre de billets lu.

7. Automate selon l'une des revendications 1 à 6, **caractérisé en ce que** les moyens de paramétrage d'au moins un fond de caisse, dans le système informatique (3), permettent de paramétrer un identifiant (281) de la caissière associée au fond de caisse (284), l'autorisation ou non du retrait de monnaie par la caissière, si oui, la valeur du retrait maximum de monnaie autorisé, le nombre de fonds de caisse (288) que la caissière peut retirer par jour et le nombre de réassorts (289) dont la caissière peut disposer dans une journée.

8. Automate selon l'une des revendications 1 à 7, **caractérisé en ce que** les moyens de paramétrage d'au moins un fond de caisse, dans le système informatique (3), permettent également de paramétrer la tranche horaire (247, 248) pendant laquelle les caissières sont autorisées à retirer des fonds de caisse et sont associés à des moyens de blocage des retraits de fond de caisse en dehors de cette tranche horaire.

9. Automate selon l'une des revendications 1 à 8, **caractérisé en ce que** le système informatique (3) comprend un ordinateur, dit ordinateur (31) interne, situé à l'intérieur du distributeur (1).

10. Automate selon l'une des revendications 1 à 9, **caractérisé en ce que** l'ordinateur (31) interne est apte à communiquer avec un clavier (32) extérieur au distributeur (1), par l'intermédiaire d'une connexion électrique temporaire ou de moyens de communication sans fil, sans nécessiter l'ouverture du distributeur (1).

11. Automate selon l'une des revendications 1 à 10, **caractérisé en ce que** le distributeur (101) ou le clavier (32) extérieur comprend des moyens (108) de communication avec un objet portable informatisé comprenant un circuit électronique ou mémorisant des données informatiques.

12. Automate selon l'une des revendications 1 à 11, **caractérisé en ce que** l'ordinateur (31) interne est apte à communiquer avec au moins un système informatique extérieur au distributeur, par l'intermédiaire d'un réseau informatique ou d'une liaison informatique permanente ou temporaire.

13. Automate selon l'une des revendications 1 à 12, **caractérisé en ce que** le système informatique (3) comprend un ordinateur utilisant un système d'exploitation fonctionnant selon une interface graphique interactive pour mettre en oeuvre les moyens de recherche, ou des moyens de lecture, ou des moyens de commande, ou des moyens de paramétrage, ou une combinaison de ces moyens.

14. Procédé de préparation et de distribution de fonds de caisse et de monnaie, sous la forme de pièces et billets, mis en oeuvre par un automate selon une des revendications 1 à 13 **caractérisé en ce qu'**il comprend les étapes suivantes :
- saisie d'un code personnel,
- identification par un système informatique (3) du code,
- recherche dans une base de données mémorisée, du fond de caisse associé au code saisi,
- lecture par des moyens de lecture du système informatique (3) du fond de caisse trouvé et comprenant le nombre d'enveloppes comprenant des billets de banque à distribuer, ou le nombre de billets de banque à distribuer pour chaque type de billet, ainsi que le nombre de pièces à distribuer pour chaque type de pièces,
- commande par le système informatique (3) d'un distributeur (1) distribuant des fonds de caisse pour délivrer ce nombre d'enveloppes, ou ce nombre de billets pour chaque type de billets, et pour éjecter ce nombre de pièces pour chaque type de pièces,
- acheminement, pour chaque type de pièces, des pièces éjectées vers un compartiment particulier d'un tiroir-caisse.

15. Procédé selon la revendication 14, **caractérisé en ce qu'**il comprend une étape de comptage, pour chaque type de pièce ou de billet, des quantités de pièces ou de billets réellement distribuées et une étape de report de ces quantités sur le système informatique (3) pour les déduire des quantités mémorisées de pièces ou de billets stockées dans le distributeur (1).

## Claims

1. Automatic machine for preparation and dispensing of cash floats in the form of coins, comprising a dispenser (1) which comprises means for storage of coins, means for ejection of the means for storage of coins, means for forwarding the ejected coins towards compartments of a cash drawer (2), **characterised in that** the dispenser (1) is coupled to a computer system (3) comprising
- means for parameterisation of at least one cash float, the parameterisation means enabling, by means of an input interface of the automatic machine, parameterisation of the dispensing of coins by memorising for each cash float a parameter representing the number of coins to be dispensed for each category of coins,
- means for parameterisation of at least one user, the parameterisation means enabling, by means of an input interface of the automatic machine, association of the appropriate parameters to each user,
- a database (db1) for storage of the parameters linked to the list of cash floats, enabling listing of the cash floats of different types;
- a database (db2) for storage of the parameters associated with each user;
- means for searching for an identifier entered via the input interface and for the cash float associated with this identifier;
- means for reading, for the cash float found, the number of coins to be dispensed memorised for each category of coins; and
- command means which command the distributor (1) to distribute the number of coins
read at the same time for each category of coins;
the means for forwarding of coins comprising a plurality of chutes (56) assembled in order to form one single block (5), each chute (50) comprising an inlet which communicate with a hopper (4) and an outlet which communicates with one single compartment of the cash drawer (2) to be supplied, this block (5) being removable and provided in order to be positioned by joining means in the distributor, these joining means being able to receive several different models of block (5) chosen as a function of the type of cash drawer (2) to be supplied.

2. Automatic machine as claimed in Claim 1, **characterised in that** the cash float may also be in the form of banknotes or envelopes, by virtue of the presence in the distributor (1) of means (12) for dispensing banknotes from storage means for banknotes towards a reception station (115), the means for dispensing banknotes being capable of extracting banknotes singly in the means for storage of banknotes.

3. Automatic machine as claimed in Claim 2, **characterised in that** the means for storage of banknotes comprise at least two storage stations (121, 122) each containing a different type of banknote.

4. Automatic machine as claimed in any one of Claims 2 to 3, **characterised in that** it comprises a counter of the number of ejected coins of each type, or of extracted banknotes of each type.

5. Automatic machine as claimed in Claim 4, **characterised in that** the means for storage of coins are constituted by a plurality of hoppers (4), each hopper (4) being dedicated to a type of coins, the counter comprising at least one photoelectric cell placed at the outlet of each hopper (4) or station (121, 122) for storage of banknotes, this cell detecting the number of coins ejected from the hopper (4) by the ejection means or the number of banknotes extracted from the storage station (121, 122) by the means for dispensing banknotes.

6. Automatic machine as claimed in Claim 2, **characterised in that** the computer system (3) comprises means for reading, for the cash float found, the number of banknotes to be dispensed for each category of banknotes, command means commanding the dispenser to dispense at the same time, for each category of banknotes, the number of banknotes read.

7. Automatic machine as claimed in any one of Claims 1 to 6, **characterised in that** the means for parameterisation of at least one cash float in the computer system (3) make it possible to parameterise an identifier (281) of the cashier associated with the cash float (284), the authorisation or non-authorisation of the withdrawal of cash by the cahier, if yes, the value of the maximum cash withdrawal authorised, the number of cash floats (288) which the cashier can withdraw per day and the number of times the cashier can restock (289) in one day.

8. Automatic machine as claimed in any one of Claims 1 to 7, **characterised in that** the means for parameterisation of at least one cash float in the computer system (3) also make it possible to parameterise the time slot (247, 248) during which the cashiers are authorised to withdraw cash floats and are associated with means for blocking cash float withdrawals outside this time slot.

9. Automatic machine as claimed in any one of Claims 1 to 8, **characterised in that** the computer system (3) comprises a computer, a so-called internal computer (31), situated inside the dispenser (1).

10. Automatic machine as claimed in any one of Claims 1 to 9, **characterised in that** the internal computer (31) is capable of communicating with a keyboard (32) outside the dispenser (1) by means of a temporary electrical connection or wireless communication means, without the need to open the dispenser (1).

11. Automatic machine as claimed in any one of Claims 1 to 10, **characterised in that** the distributor (101) or the external keyboard (32) comprises means (108) for communication with a computerised portable object which comprises an electronic circuit or stores computer data.

12. Automatic machine as claimed in any one of Claims 1 to 11, **characterised in that** the internal computer (31) is capable of communicating with at least one computer system outside the dispenser by means of a computer network or a permanent or temporary computer connection.

13. Automatic machine as claimed in any one of Claims 1 to 12, **characterised in that** the computer system (3) comprises a computer using an operating system functioning according to an interactive graphical interface in order to implement the searching means, or the reading means, or the command means, or the parameterisation means, or a combination of these means.

14. Method of preparation and of dispensing of cash floats and of cash, in the form of coins and banknotes, implemented by an automatic machine as claimed in any one of Claims 1 to 13, **characterised in that** it comprises the following steps:
- input of a personal code,
- identification of the code by a computer system (3),
- search in a database memory for the cash float associated with the code entered,
- reading by reading means of the computer system (3) of the cash float found and comprising the number of envelopes comprising banknotes to be dispensed, or the number of banknotes to be dispensed for each type of banknote, and also the number of coins to be dispensed for each type of coins,
- command by the computer system (3) of a dispenser (1) dispensing cash floats in order to deliver this number of envelopes, or this number of banknotes for each type of banknotes, and in order to eject this number of coins for each type of coins,
- forwarding, for each type of coins, of ejected coins towards a specific compartment of a cash drawer.

15. Method as claimed in Claim 14, **characterised in that** it comprises a step of counting, for each type of coin or banknote, of quantities of coins or banknotes actually dispensed, and a step of referring these quantities to the computer system (3) in order to deduct them from the memorised quantities of coins or banknotes stored in the dispenser (1).

## Patentansprüche

1. Automat zum Vorbereiten und Ausgeben von Kassenfonds und Geld in Form von Münzen, der einen Verteiler (1) umfasst, der Folgendes umfasst: Mittel zum Aufnehmen von Geldmünzen, Mittel zum Auswerfen von Mitteln zum Aufnehmen von Geldmünzen, Mittel zum Befördern von ausgeworfenen Geldmünzen zu Fächern einer Kassenschublade (2), **dadurch gekennzeichnet, dass** der Verteiler (1) mit einem IT-System gekoppelt ist, das Folgendes umfasst:
- Mittel zum Parametrisieren von wenigstens einem Kassenfond, wobei es die Parametrisierungsmittel ermöglichen, über eine Erfassungsschnittstelle des Automaten die Ausgabe von Münzen zu parametrisieren, indem für jeden Kassenfond ein Parameter gespeichert wird, der für die Zahl der auszugebenden Münzen für jede Münzkategorie repräsentativ ist,
- Mittel zum Parametrisieren wenigstens eines Benutzers, wobei es die Parametrisierungsmittel ermöglichen, über eine Erfassungsschnittstelle des Automaten für jeden Benutzer individuelle Parameter zuzuordnen,
- eine Datenbank (db1) zum Speichern der mit der Liste von Kassenfonds verbundenen Parameter und zum Auflisten von Kassenfonds verschiedener Typen;
- eine Datenbank (db2) zum Speichern der mit jedem Benutzer assoziierten Parameter;
- Mittel zum Suchen einer über die Erfassungsschnittstelle erfassten Kennung und des mit dieser Kennung assoziierten Kassenfond;
- Mittel zum Lesen, für den gefundenen Kassenfond, der Zahl der auszugebenden Münzen, die für jede Münzkategorie gespeichert ist; und
- Steuermittel, um den Verteiler (1) anzuweisen, für alle Münzkategorien gleichzeitig die Zahl der gelesenen Münzen auszugeben;
- Mittel zum Befördern von Münzen, die mehrere zu einem einzigen Block (5) zusammengefügte Rinnen (50) aufweisen, wobei jede Rinne (50) einen Eingang in Verbindung mit einem Trichter (4) und einen Ausgang in Verbindung mit einem einzigen Fach der zu versorgenden Kassenschublade (2) hat, wobei dieser Block (5) abnehmbar und so gestaltet ist, dass er durch Feststellmittel im Verteiler positioniert werden kann, wobei diese Feststellmittel mehrere verschiedene Blockmodelle (5) aufnehmen können, die je nach dem zu versorgenden Kassenschubladentyp (2) gewählt werden.

2. Automat nach Anspruch 1, **dadurch gekennzeichnet, dass** die Kassenfonds aufgrund der Anwesenheit von Banknotenausgabemitteln (12) in dem Verteiler (1) von Geldscheinaufnahmemitteln zu einer Empfangsstelle (115) auch in Form von Geldscheinen oder Paketen vorliegen können, wobei die Geldscheinausgabemittel den Geldscheinaufnahmemitteln Geldscheine einzeln entnehmen können.

3. Automat nach Anspruch 2, **dadurch gekennzeichnet, dass** die Geldscheinaufnahmemittel wenigstens zwei Aufnahmestellen (121, 122) umfassen, die jeweils einen anderen Geldscheintyp enthalten.

4. Automat nach einem der Ansprüche 2 bis 3, **dadurch gekennzeichnet, dass** er einen Zähler zum Zählen der ausgeworfenen Münzen jedes Typs oder von entnommenen Geldscheinen jedes Typs umfasst.

5. Automat nach Anspruch 4, **dadurch gekennzeichnet, dass** die Münzaufnahmemittel von mehreren Trichtern (4) gebildet werden, wobei jeder Trichter (4) für einen Geldstücktyp dediziert ist, wobei der Zähler wenigstens eine Fotozelle umfasst, die sich am Ausgang jedes Trichters (4) oder jeder Geldscheinaufnahmestelle (121, 122) befindet, wobei diese Zelle die Zahl der von den Auswurfmitteln aus dem Trichter (4) ausgeworfenen Münzen oder die Zahl der von den Geldscheinausgabemitteln aus der Aufnahmestelle (121, 122) genommenen Geldscheine detektiert.

6. Automat nach Anspruch 2, **dadurch gekennzeichnet, dass** das IT-System (3) Mittel, um für den gefundenen Kassenfond die Zahl der für jede Geldscheinkategorie auszugebenden Geldscheine zu lesen, und Steuermittel umfasst, um den Verteiler anzuweisen, für alle Geldscheinkategorien gleichzeitig die gelesene Zahl der Geldscheine auszugeben.

7. Automat nach einem der Ansprüche 1 bis 6, **dadurch gekennzeichnet, dass** es die Mittel zum Parametrisieren von wenigstens einem Kassenfond im IT-System (3) ermöglichen, Folgendes zu parametrisieren: eine Kennung (281) für den mit dem Kassenfond (284) assoziierten Klassierer, ob der Kassierer zur Geldentnahme autorisiert ist oder nicht, und wenn ja, den autorisierten Höchstbetrag der Geldentnahme, die Zahl der Kassenfonds (288), aus denen der Klassierer pro Tag entnehmen darf, und die Zahl der Nachfüllungen (289), die ein Klassierer im Laufe eines Tages vornehmen kann.

8. Automat nach einem der Ansprüche 1 bis 7, **dadurch gekennzeichnet, dass** die Mittel zum Parametrisieren von wenigstens einem Kassenfond in dem IT-System (3) auch die Parametrisierung der vom Kassierer aus Kassenfonds entnehmbaren Beträge pro Zeiteinheit (247, 248) ermöglicht, und die mit Mitteln zum Sperren des Entnehmens von Kassenfonds jenseits dieser Beträge pro Zeiteinheit assoziiert sind.

9. Automat nach einem der Ansprüche 1 bis 8, **dadurch gekennzeichnet, dass** das IT-System (3) einen im Verteiler (1) befindlichen Computer, interner Computer (31) genannt, umfasst.

10. Automat nach einem der Ansprüche 1 bis 9, **dadurch gekennzeichnet, dass** der interne Computer (31) mit einer Tastatur (32) außerhalb des Verteilers (1) über eine temporäre elektrische Verbindung oder über drahtlose Kommunikationsmittel kommunizieren kann, ohne den Verteiler (1) öffnen zu müssen.

11. Automat nach einem der Ansprüche 1 bis 10, **dadurch gekennzeichnet, dass** der Verteiler (101) oder die externe Tastatur (32) Mittel (108) zum Kommunizieren mit einem computerisierten tragbaren Objekt umfasst, das eine elektronische Schaltung umfasst oder IT-Daten speichert.

12. Automat nach einem der Ansprüche 1 bis 11, **dadurch gekennzeichnet, dass** der interne Computer mit wenigstens einem IT-System außerhalb des Verteilers über ein IT-Netz oder eine permanente oder temporäre IT-Verbindung kommunizieren kann.

13. Automat nach einem der Ansprüche 1 bis 12, **dadurch gekennzeichnet, dass** das IT-System (3) einen Computer umfasst, der ein Betriebssystem verwendet, das mit einer interaktiven Graphikoberfläche arbeitet, um die Suchmittel oder Lesemittel oder Steuermittel oder Parametrisierungsmittel oder eine Kombination dieser Mittel zu betreiben.

14. Verfahren zum Vorbereiten und Ausgeben von Kassenfonds und Geld in Form von Geldstücken und Geldscheinen, ausgeführt von einem Automat nach einem der Ansprüche 1 bis 13, **dadurch gekennzeichnet, dass** es die folgenden Schritte umfasst:
- Erfassen eines persönlichen Codes,
- Identifizieren des Codes mit einem IT-System (3),
- Suchen des mit dem erfassten Code assoziierten Kassenfond in einer gespeicherten Datenbank,
- Lesen, mit Lesemitteln des IT-Systems (3), des gefundenen Kassenfond, umfassend die Zahl der Pakete, die auszugebende Banknoten oder die Zahl der für jeden Geldscheintyp auszugebenden Banknoten sowie die Zahl der für jeden Münztyp auszugebenden Münzen umfasst,
- Steuern, mit dem IT-System (3), eines Verteilers (1), der Kassenfonds zum Liefern dieser Zahl von Paketen oder dieser Zahl von Geldscheinen für jeden Geldscheintyp ausgibt, und um diese Zahl von Münzen für jeden Münztyp auszuwerfen,
- Befördern, für jeden Münztyp, der ausgeworfenen Münzen zu einem bestimmten Fach einer Kassenschublade.

15. Verfahren nach Anspruch 14, **dadurch gekennzeichnet, dass** es einen Schritt des Zählens, für jeden Münz- oder Geldscheintyp, der Mengen von tatsächlich ausgegebenen Münzen oder Geldscheinen und einen Schritt des Anzeigens dieser Mengen auf dem IT-System (3) beinhaltet, um davon die gespeicherten Mengen von im Verteiler (1) aufgenommenen Münzen oder Geldscheinen abzuleiten.
